# EUROPEAN PATENT APPLICATION

(11) **EP 4 318 736 A1**
(43) Date of publication of application: **07.02.2024**
(21) Application number: 22867720.9
(22) Date of filing: 08.09.2022
(51) Int. Cl.: H01M 10/653, H01M 10/655, H01M 10/647, H01M 10/613, H01M 50/211, H01M 50/24

(54) **BATTERY MODULE AND BATTERY PACK INCLUDING SAME**

(30) Priority: 09.09.2021 KR 20210120125
(71) Applicant: LG ENERGY SOLUTION, LTD., Seoul 07335 (KR)
(72) Inventor: KIM, Min Seop, Daejeon 34122 (KR); SEONG, Junyeob, Daejeon 34122 (KR); JEON, Jongpil, Daejeon 34122 (KR)
(74) Representative: Plasseraud IP
(86) International application number: PCT/KR2022/013505
(87) International publication number: WO 2023/038452

(57) **Abstract**

A battery module according to one embodiment of the present disclosure includes a battery cell stack in which a plurality of battery cells are stacked, a module frame that surrounds the battery cell stack, and a first heat transfer member and a second heat transfer member located on the bottom portion of the module frame, wherein the second heat transfer member is formed on an outer part of the first heat transfer member.

## Description

### [TECHNICAL FIELD]

### Cross Citation with Related Application(s)

This application claims the benefit of Korean Patent Application No. 10-2021-0120125 filed on September 9, 2021 with the Korean Intellectual Property Office, the entire contents of which are incorporated herein by reference.

The present disclosure relates to a battery module and a battery pack including the same, and more particularly to a battery module having a novel cooling structure and a battery pack including the same.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while middle or large-sized devices such as vehicles require high power and large capacity. Therefore, a middle or large-sized battery module having a plurality of battery cells electrically connected to one another is used.

Since middle or large-sized battery modules are preferably manufactured with as small a size and weight as possible, a prismatic battery, a pouch-type battery, or the like, which can be stacked with high integration and has a small weight relative to capacity, is mainly used as a battery cell of the middle or large-sized battery modules. Such a battery module has a structure in which a plurality of cell assemblies including a plurality of unit battery cells are connected in series to obtain high output. And, the battery cell includes positive and negative electrode current collectors, a separator, an active material, an electrolyte, and the like, and thus can be repeatedly charged and discharged through an electrochemical reaction between components.

Meanwhile, in recent years, amid the growing need for large-capacity structures including their utilization as an energy storage source, there is an increasing demand for battery packs having a multi-module structure formed by assembling a plurality of battery modules in which a plurality of secondary batteries are connected in series and/or in parallel.

Further, when a plurality of battery cells are connected in series or in parallel to configure a battery pack, it is common to configure a battery module composed of at least one battery cell first and then configure a battery pack by using at least one battery module and adding other components.

Generally, when the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle or large-sized battery module included in a vehicle battery pack, it is frequently exposed to direct sunlight and may be placed under high-temperature conditions such as summer or desert areas.

Recently, the need for high capacity, high energy, rapid charging or the like is continuously increasing, and heat generated in the battery cells tends to increase. Thereby, a heat dissipation layer may be formed in the battery module for discharging heat generated from the battery cells to the outside. Further, the heat dissipation layer may be formed by applying a material having a heat dissipation function to a required portion within the battery module. However, when applying the heat dissipation material, it may not be possible to apply it to a desired portion due to structural reasons, and there is also a possibility of damaging the battery cell due to structural characteristics. As a result, the cooling performance may be deteriorated, and the stability performance of the battery module may be deteriorated. Therefore, there is a need for a new structure that can secure cooling performance and stability.

### [DETAILED DESCRIPTION OF THE INVENTION]

### [Technical Problem]

It is an object of the present disclosure to provide a battery module that can solve the heat generation problem in battery cells, and a battery pack including the same.

However, the objects of the present disclosure are not limited to the aforementioned objects, and other objects which are not mentioned herein should be clearly understood by those skilled in the art from the following detailed description and the accompanying drawings.

### [Technical Solution]

According to one embodiment of the present disclosure, there is provided a battery module comprising: a battery cell stack in which a plurality of battery cells are stacked, a module frame that surrounds the battery cell stack, and a first heat transfer member and a second heat transfer member located on the bottom portion of the module frame, wherein the second heat transfer member is formed on an outer part of the first heat transfer member.

The first heat transfer member and the second heat transfer member may be formed of dissimilar materials.

The first heat transfer member may include a thermal conductive resin layer, and the second heat transfer member may include a heat transfer pad.

The second heat transfer member may make contact with the first heat transfer member.

The second heat transfer member may make contact with a lower portion of the battery cell stack.

The second heat transfer member may be formed to be adjacent to a front surface or a rear surface of the battery cell stack.

The second heat transfer member may be formed so as to make contact with a terrace portion of the battery cell.

The second heat transfer member may be formed higher than a height of the first heat transfer member.

The second heat transfer member may be formed of a material having thermal conductivity and softness.

The second heat transfer member may be formed of a material containing silicon.

The second heat transfer member may include a foam material.

The second heat transfer member may have a smaller hardness than the first heat transfer member.

Heat transferred from the battery cell may be sequentially transferred and released through the second heat transfer member and the module frame.

According to another embodiment of the present disclosure, there is provided a battery pack comprising the above-mentioned battery module.

### [Advantageous Effects]

A battery module according to one embodiment of the present disclosure includes first and second heat transfer members, thereby capable of solving the heat generation problem in battery cells under high current and rapid charging environments. Also, as the heat generation problem is solved, the stability of the battery module can also be improved.

Moreover, the second heat transfer member includes thermal conductivity and softness, thereby capable of minimizing damage to the battery cell due to vibration impact.

In addition, the second heat transfer member can prevent overflow of the first heat transfer member.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view of a battery module of the present disclosure;
Fig. 2 is a perspective view showing a battery module in which the components of Fig. 1 are assembled;
Fig. 3 is an enlarged view showing a state cut along a section P1 of Fig. 2;
Fig. 4 is a cross-sectional view of a battery module according to another embodiment of the present disclosure;
Fig. 5 is a perspective view showing a battery cell included in the battery module of the present disclosure; and
Fig. 6 is a cross-sectional view showing a battery pack according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used herein to explain various components, but the components should not be limited by the terms. These terms are only used to distinguish one component from another component.

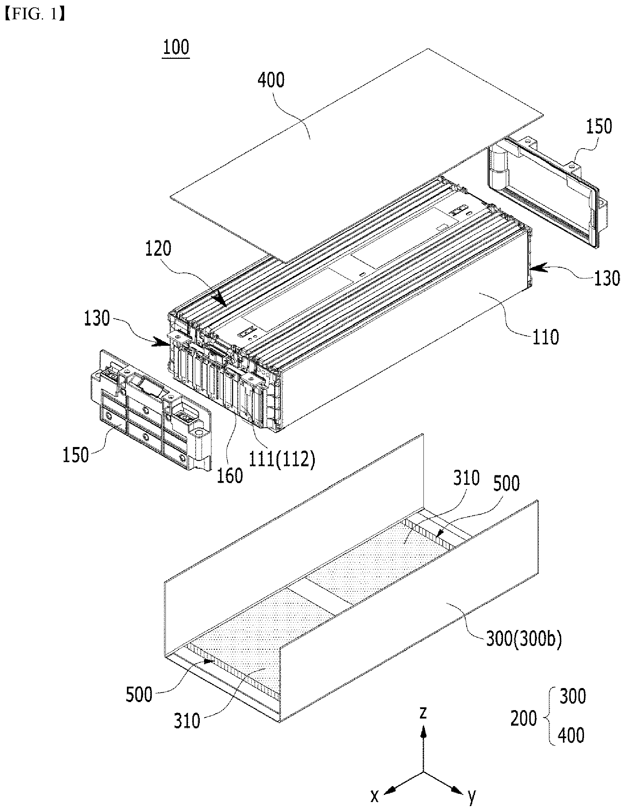

Hereinafter, a battery module of the present disclosure will be described with reference to Figs. 1 to 5.

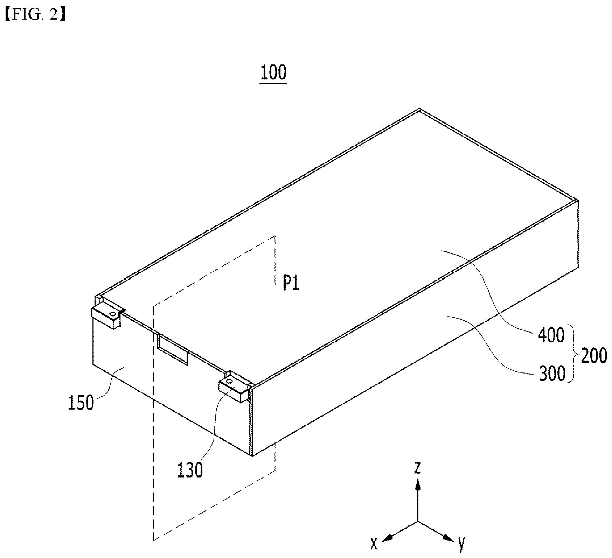

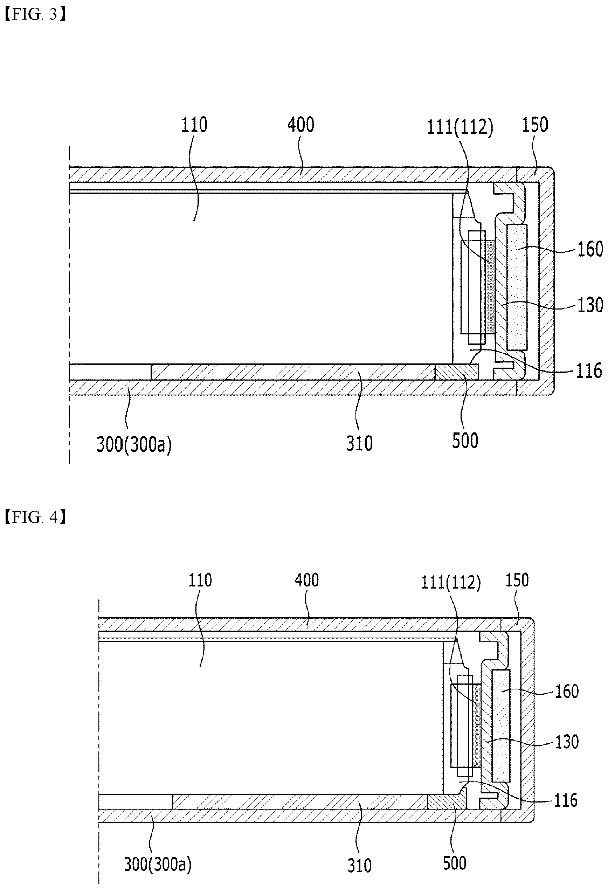

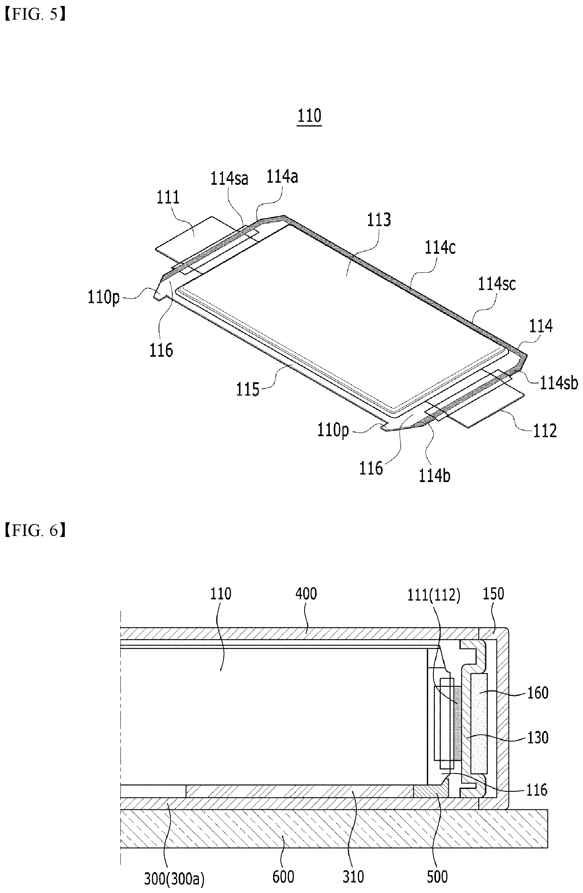

Fig. 1 is an exploded perspective view of a battery module of the present disclosure. Fig. 2 is a perspective view showing a battery module in which the components of Fig. 1 are assembled. Fig. 3 is an enlarged view showing a state cut along a section P1 of Fig. 2. Fig. 4 is a cross-sectional view of a battery module according to another embodiment of the present disclosure. Fig. 5 is a perspective view showing a battery cell included in the battery module of the present disclosure.

Referring to Figs. 1 and 2, a battery module 100 according to the present embodiment includes a battery cell stack 120 in which a plurality of battery cells 110 are stacked, and a module frame 200 that surrounds the battery cell stack 120.

First, the battery cell 110 is preferably a pouch-type battery cell, and can be formed in a rectangular sheet-like structure. For example, referring to Fig. 5, the battery cell 110 according to the present embodiment has a structure in which two electrode leads 111 and 112 face each other and protrude from one end part 114a and the other end part 114b of the cell main body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a connection part 115. The cell case 114 may be composed of a laminated sheet including a resin layer and a metal layer.

Additionally, the connection part 115 may extend long along one edge of the battery cell 110, and a bat-ear 110p may be formed at an end of the connection part 115. Further, while the cell case 114 is sealed with the protruding electrode leads 111 and 112 being interposed therebetween, a terrace portion116 may be formed between the electrode leads 111 and 112 and the cell main body 113. That is, the battery cell 110 may include a terrace portion1 16 formed to extend from the cell case 114 in the direction in which the electrode leads 111 and 112 protrude.

Such a battery cell 110 may be composed by a plurality of numbers, and the plurality of battery cells 110 may be stacked so as to be electrically connected to each other, thereby forming a battery cell stack 120. Particularly, as shown in Fig. 1, a plurality of battery cells 110 may be stacked along the direction parallel to the y-axis. Thereby, the electrode leads 111 and 112 may protrude in the x-axis direction and the -x-axis direction, respectively.

Meanwhile, when charge and discharge of the battery cells 110 are repeatedly performed, heat is generated. Even among them, a great amount of heat generates in a portion adjacent to the electrode leads 111 and 112. That is, as it approaches to the terrace portion1 16 rather than the central portion of the cell main body 113, more heat is generated due to the charge and discharge, so that a structure for cooling the corresponding part may be required.

The module frame 200 may include a frame member 300 which is opened in the upper surface, the front surface and the rear surface thereof and covers the lower portion and both side parts of the battery cell stack 120, and an upper plate 400 that covers an upper part of the battery cell stack 120. However, the module frame 200 is not limited thereto, and can be replaced with a frame having another shape such as an L-shaped frame or a mono-frame that surrounds the battery cell stack 120 except the front and rear surfaces thereof. The battery cell stack 120 housed inside the module frame 200 can be physically protected through the module frame 200. At this time, the frame member 300 may include a bottom portion 300a supporting the lower portion of the battery cell stack 120, and side surface parts 300b each extending upward from both ends of the bottom portion 300a.

The upper plate 400 may cover the opened upper side surface of the module frame 200. The end plate 150 can cover a front surface and a rear surface of the battery cell stack 120 that are opened in the module frame 200. The end plate 150 can be weld-coupled with the front and rear end edges of the upper plate 400 and the front and rear end edges of the module frame 200.

A bus bar frame 130 can be formed between the end plate 150 and the front and rear surfaces of the battery cell stack 120. The plurality of bus bars 160 mounted on the bus bar frame 130 are formed so as to protrude from the battery cells 110, and can make contact with the electrode leads 111 and 112 mounted on the bus bar frame 130.

A conventional battery module is configured such that heat generated in the battery cells is discharged through the thermal conductive resin layer formed at a lower portion of the battery cell. However, the thermal conductive resin layer had a problem that it cannot efficiently cool the electrode leads and terrace parts on the front and rear surfaces of the battery cell. In addition, the conventional battery module was highly likely to occur cracks on the front and rear surfaces of the battery cell due to vibration applied to the battery module, but there was no structure that can prevent this. Therefore, in a situation where the electrode leads and terrace parts of the battery cell are made to generate high heat in a short period of time by the flow of high current, such as rapid charging, a cooling structure capable of minimizing the temperature rise of battery cells is required, and a structure capable of minimizing the possibility of damage to a battery cell is required.

Therefore, referring to Figs. 1 and 3, the battery module 100 according to the present embodiment includes a first heat transfer member 310 and ae second heat transfer member 500 that are located on the bottom portion of the module frame 200, that is, the bottom portion 300a of the frame member 300. At this time, the second heat transfer member 500 is formed on the outer part of the first heat transfer member 310.

At this time, the outer part of the first heat transfer member 310 may be an edge of the first heat transfer member 310 located in a direction in which the electrode leads 111 and 112 of the battery cell 110 are formed. Therefore, the second heat transfer member 500 may be formed so as to be located at the edge of the first heat transfer member 310. Moreover, the second heat transfer member 500 is formed on the outer part of the first heat transfer member 310 so that it can contact the first heat transfer member 310.

The second heat transfer member 500 and the first heat transfer member 310 may be formed of dissimilar materials. Specifically, the first heat transfer member 310 may include a thermal conductive resin layer, and the second heat transfer member 500 may include a heat transfer pad.

In order to form the first heat transfer member 310, various methods can be used, and specifically, may include applying a thermal conductive resin onto the bottom portion 300a of the frame member 300 and curing the thermal conductive resin to form a thermal conductive resin layer. At this time, the second heat transfer member 500 can guide the application position of the thermal conductive resin or prevent the thermal conductive resin from overflowing to the outside of the bottom portion 300a.

Meanwhile, the second heat transfer member 500 according to the present embodiment may be formed on the bottom portion 300a of the frame member 300 to make contact with the lower portion of the battery cell stack 120.

In particular, as described above, the second heat transfer member 500 may be formed on the edge of the first heat transfer member 310, wherein the edge may be adjacent to a front surface or a rear surface of the battery cell stack 120. Therefore, the second heat transfer member 500 may be formed to be adjacent to the front surface or rear surface of the battery cell stack 120. That is, the second heat transfer member 500 may make contact with the lower portion of the battery cell stack 120 corresponding to the front surface and rear surface of the battery cell stack 120.

As described above, in the case of the battery cell 110, a large amount of heat is generated in the terrace portion 116 and the electrode leads 111 and 112 rather than in the central portion of the battery cell 110. Therefore, the second heat transfer member 500 may be formed so as to make contact with the terrace portion 116 of the battery cell 110. Therefore, heat generated in the battery cell 110 may be cooled and transferred through the second heat transfer member 500. The second heat transfer member 500 forms a cooling path for making direct contact with the terrace portion 116, thereby capable of improving the heat dissipation function of the battery cell and improving the temperature deviation of each part of the battery cell. The temperature deviation of each part of the battery cell causes performance degradation of the battery cell, so that the effect of maintaining performance and securing safety of the battery cell can be achieved through the second heat transfer member 500.

Referring to Fig. 3, the second heat transfer member 500 according to the present embodiment may be formed in a pad shape and may be formed side by side so as to make contact with the first heat transfer member 310. In particular, the second heat transfer member 500 is formed equal to the height of the first heat transfer member 310, and thereby can be formed so as to make contact with the terrace portion 116 of the battery cell 110. In addition, the overflow prevention function of the first heat transfer member 310 can be performed.

The second heat transfer member 500 according to another embodiment of the present disclosure may be formed higher than the height of the first heat transfer member 310. That is, referring to Fig. 5, the second heat transfer member 500 according to the present embodiment may be formed so as to surround the terrace portion 116 of the battery cell 110. Accordingly, the second heat transfer member 500 can protect the terrace portion 116 of the battery cell 110 and the front surface and rear surface of the battery cell 110, which may be damaged due to vibration impact, thereby improving the stability of the battery module. In addition, as it is formed higher than the height of the first heat transfer member 310, it can prevent the first heat transfer member 310 from forming and overflowing, and can guide so that the first heat transfer member 310 is formed at a desired position.

At this time, the height represents the lengths of the first heat transfer member 310 and the second heat transfer member 500 grasped on a cross section, and thus can be used as having the same meaning as the thickness. Therefore, the second heat transfer member 500 may be formed thicker than the first heat transfer member 310.

Meanwhile, the second heat transfer member 500 according to the present embodiment may be formed of a material having thermal conductivity and softness. Specifically, it is formed of a material having excellent softness as compared with the first heat transfer member 310, so that damage to the battery cell 110 due to vibration impact can be prevented, and particularly, damage to the terrace portion 116 of the battery cell 110 can be prevented. That is, the second heat transfer member 500 has softness and thus, can absorb impact applied to the battery cell 110.

The second heat transfer member 500 according to the present embodiment may be formed of a material containing silicon. Further, the second heat transfer member 500 according to the present embodiment may be formed in the form of a heat transfer pad containing silicon. At this time, the second heat transfer member 500 may include a foam material. Generally, foam materials have a low density and permeable structure, which results in a wide surface area. Thus, it is possible to secure effective cooling performance based on a wide surface area. Therefore, the second heat transfer member 500 according to the present embodiment may be specifically formed of a silicone foam material.

The second heat transfer member 500 according to the present embodiment may have a smaller hardness than the first heat transfer member 310. Specifically, the second heat transfer member 500 may have a numerical value of 20 to 50 based on shore hardness. This has a smaller hardness than 100, which is the value of the first heat transfer member 310, thereby capable of preventing occurrence of cracks in the battery cell 110 as described above.

The second heat transfer member 500 according to the present embodiment may have a thermal conductivity of at least 3.0 W/m K or more. Therefore, the second heat transfer member 500 may include a material selected among various materials having the above thermal conductivity value, and specifically may include a silicon material.

The second heat transfer member 500 according to the present embodiment may be formed of a material having thermal conductivity and softness, may include silicon, and may be formed to have a smaller hardness than the first heat transfer member 310. Therefore, it is possible to prevent the battery cell 110 from colliding with the second heat transfer member 500 or cracking due to an external impact, as well as ensuring the cooling performance. In particular, since it is formed of a material containing silicon, it is possible to secure thermal conductivity, softness, and hardness having the above characteristics.

In addition, as the battery module according to the present embodiment includes the second heat transfer member 500, heat generated in the battery cell 110 may be transferred to the first heat transfer member 310 and the second heat transfer member 500 and released to the outside of the battery module. Therefore, heat transferred from the battery cell 110 may be sequentially transferred and released through the second heat transfer member 500 and the module frame 200.

Next, a battery pack according to another embodiment of the present disclosure will be described with reference to Fig. 6.

Fig. 6 is a diagram showing a battery pack according to another embodiment of the present invention.

Referring to Fig. 6, the battery pack according to the present embodiment includes the battery module described above. In addition, it may further include a heat sink 600, and may further include a thermal conductive resin layer formed between the bottom portion 300a of the module frame and the heat sink 600.

Therefore, as described above, heat transferred from the battery cell 110 is transferred and cooled to the heat sink 600 formed in the battery pack, thereby enabling effective cooling of the large amounts of heat generated in rapid charging situations.

In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although preferred embodiments of the present disclosure have been described in detail above, the scope of the present disclosure is not limited thereto, and numerous other modifications and embodiments can be devised by those skilled in the art, without departing from the spirit and scope of the principles of the invention described in the appended claims. Further, these modifications should not be understood individually from the technical spirit or perspective of the present disclosure.

### [Description of Reference Numerals]

100: battery module
110: battery cell
120: battery cell stack
130: bus bar frame
150: end plate
160: bus bar
200: module frame
300: frame member
400: upper plate
500: second heat transfer member

## Claims

1. A battery module comprising:
a battery cell stack in which a plurality of battery cells are stacked,
a module frame that surrounds the battery cell stack, and
a first heat transfer member and a second heat transfer member located on the bottom portion of the module frame,
wherein the second heat transfer member is formed on an outer part of the first heat transfer member.

2. The battery module according to claim 1, wherein:
the first heat transfer member and the second heat transfer member are formed of dissimilar materials.

3. The battery module according to claim 2, wherein:
the first heat transfer member includes a thermal conductive resin layer, and
the second heat transfer member includes a heat transfer pad.

4. The battery module according to claim 1, wherein:
the second heat transfer member makes contact with the first heat transfer member.

5. The battery module according to claim 1, wherein:
the second heat transfer member makes contact with a lower portion of the battery cell stack.

6. The battery module according to claim 1, wherein:
the second heat transfer member is formed to be adjacent to a front surface or a rear surface of the battery cell stack.

7. The battery module according to claim 1, wherein:
the second heat transfer member is formed so as to make contact with a terrace portion of the battery cell.

8. The battery module according to claim 1, wherein:
the second heat transfer member is formed higher than a height of the first heat transfer member.

9. The battery module according to claim 1, wherein:
the second heat transfer member is formed of a material having thermal conductivity and softness.

10. The battery module according to claim 1, wherein:
the second heat transfer member is formed of a material containing silicon.

11. The battery module according to claim 8, wherein:
the second heat transfer member includes a foam material.

12. The battery module according to claim 1, wherein:
the second heat transfer member has a smaller hardness than the first heat transfer member.

13. The battery module according to claim 1, wherein:
heat transferred from the battery cell is sequentially transferred and released through the second heat transfer member and the module frame.

14. A battery pack comprising the battery module as set forth in claim 1.
